# EUROPEAN PATENT APPLICATION

(11) **EP 2 218 893 A2**
(43) Date of publication of application: **18.08.2010**
(21) Application number: 10151901.5
(22) Date of filing: 28.01.2010
(51) Int. Cl.: F02K 1/78, F01D 5/18

(54) **Cooled vane for gas turbine exhaust duct**

(30) Priority: 16.02.2009 GB 0902578
(71) Applicant: Rolls-Royce plc, 65 Buckingham Gate London SW1E 6AT (GB)
(72) Inventor: Cooper, Joseph, Brize Norton, Oxfordshire OX18 3PN (GB); Hayton, Paul, Bristol, South Gloucestershire BS35 4BT (GB); Luxton, Thomas, Bristol, BS34 7DH (GB)
(74) Representative: Barcock, Ruth Anita

(57) **Abstract**

A vane for use in a duct, such as an exhaust duct in a gas turbine engine, comprises a shear web (12) arranged to extend substantially across the duct and to be fixedly attached to at least one wall thereof, and one or more vane plates (14) removably mountable on the web. On each side of the web 12 three retaining plates 16 are secured to the web by bolts 18. A plurality of mounting brackets 20, are permanently fixed to the vane plates by riveting with countersunk-head rivets. Mounting brackets 20 have tangs which are arranged for slidable engagement with the retaining plates 16 in a direction opposite to arrow A. Thus, the vane plates 14 may be slid along the web 12 from a trailing edge of the vane to a leading edge, and back. Once the vane plates 14 are in the required position on the web they may be secured against further sliding movement by a pair of limiting brackets 22, one on each side of the web 12.

## Description

The present invention relates to a vane and is concerned particularly, though not exclusively, with a vane for an exhaust duct of an engine, such as an aircraft engine.

In the exhaust duct of a gas turbine engine a plurality of vanes or struts are attached to the duct casing and extend between walls of the duct to support the duct and maintain its shape. Previously considered vane designs usually comprise a complex assembly which is welded and/or riveted together as an integral structure, or else is cast as part of the duct.

The vanes are disposed in the path of hot exhaust gases from the engine and so are prone to becoming very hot themselves. To combat the effects of overheating the vane is designed to have a hollow interior which permits the flow of cooling gas within. The cooling gas, which is typically supplied as cooling air from the engine compressor, is directed through the interior of the vane and out through small diffusion holes as a "film" on its surface so that the cooling flow joins the core flow of hot exhaust gases.

From time to time it is necessary to remove the vanes from the engine, for example to repair or maintain them, or to change the size and/or number of the diffusion holes, or to replace the vanes with differently sized or differently shapes ones to alter the "throat area" of the exhaust.

Previously, to remove a vane from e.g. an exhaust duct of a gas turbine engine would entail a considerable amount of disassembly of the exhaust duct itself. A further drawback with previous vanes is their susceptibility to thermal strain, causing distortion, damage or ultimately potential failure of the vane and/or the duct casing. The susceptibility to thermal strain is often attributed to the complex welding together of the various elements of the vane.

Accordingly, embodiments of the present invention aim to provide a vane and a method of assembling a vane in which the above mentioned disadvantages are at least partially overcome.

The present invention is defined in the attached independent claims to which reference should now be made. Further preferred features may be found in the sub-claims appended thereto.

According to one aspect of the present invention there is provided a vane for use in a duct, the vane comprising a web arranged to extend substantially across the duct and to be fixed to a wall thereof, and one or more removable vane plates mountable on the web.

Preferably the or each vane plate includes at least one mounting member arranged for slidable engagement and disengagement with the web.

The invention also includes a method of forming a vane in a duct, the method comprising removably mounting at least one vane plate on a web which extends substantially across the duct and is fixedly attached to at least one wall thereof.

Preferably the method comprises locating a mounting member of a vane plate for slidable engagement with the web, and sliding the vane plate into a desired position in relation to the web.

The present invention may include any combination of the features or limitations referred to herein, except such features and limitations which are mutually exclusive.

A preferred embodiment of the present invention will now be described by way of example only with reference to the accompanying diagrammatic drawings in which:
Figure 1 shows a vane support web according to a preferred embodiment of the present invention;
Figure 2 shows the web of Figure 1 with vane plates mounted thereon;
Figure 3 is an alternative view of the vane assembly of Figures 1 and 2;
Figure 4 is a schematic view of an upper edge of the vane assembly of Figures 1 to 3;
Figure 5 is a schematic view of part of the support web of Figure 1, shown from a leading edge side; and
Figure 6 is a schematic plan-sectional view of a leading edge of the vane assembly of Figures 1 to 5.

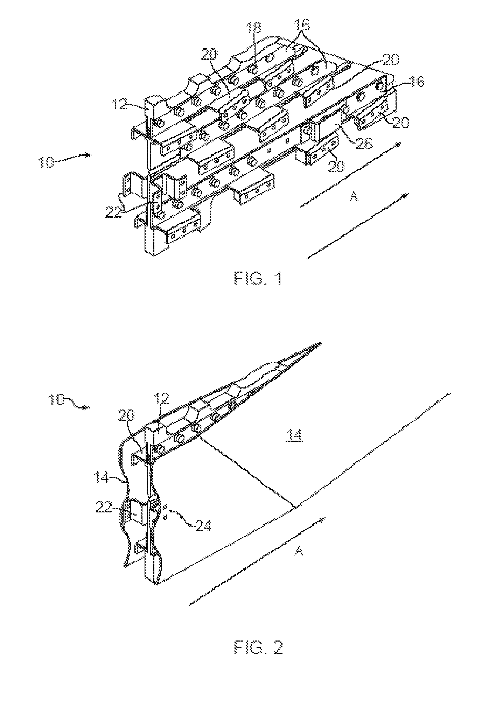

Turning to Figures 1 to 3 these show generally a vane 10 accordingly to a preferred embodiment of the present invention. The vane 10 comprises two main components, namely the shear web 12 and the vane plates 14.

In use, the vane 10 is mounted inside the exhaust duct of a gas turbine engine (not shown) for example. Arrows A represent the flow direction of hot exhaust gases in use. In Figure 2, the vane plates 14 are shown cut away to reveal the web 12, at a leading edge of the vane with respect to the flow of hot exhaust gases.

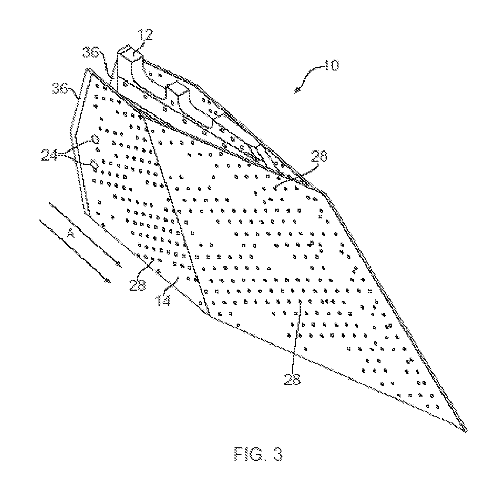

Figure 3 shows the vane plates 14 joined together (for example by welding) at the trailing edge of the vane. In Figure 3 the leading edges of the vane plates are shown. In use these are made to engage a fixed profile in the exhaust duct, as will be described later.

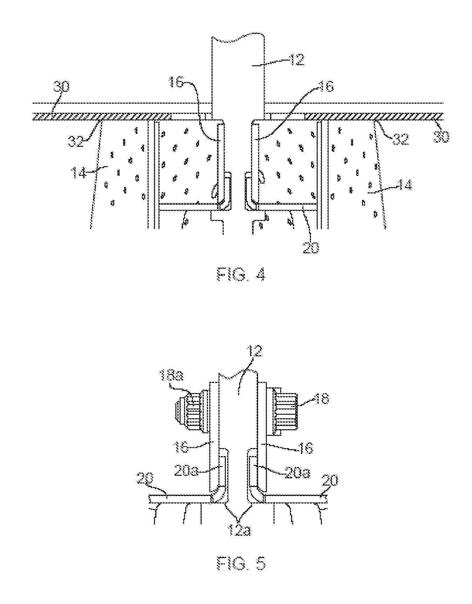

Turning back to Figure 1, the shear web 12 comprises an alloy plate which is permanently bolted inside the duct casing (not shown) and which extends fully across the duct (to be described later with reference to Figure 4).

On each side of the web 12 three metal retaining plates 16 are secured to the web by bolts 18. A plurality of mounting members, hereinafter brackets 20, are permanently fixed to the vane plates by riveting with countersunk-head rivets. Mounting brackets 20 have tangs which are arranged for slidable engagement with the retaining plates 16 in a direction opposite to arrow A, as will be described below. Thus, the vane plates 14 may be slid along the web 12 from a trailing edge of the vane to a leading edge, and back.

Once the vane plates 14 are in the required position on the web they may be secured against further sliding movement by a pair of limiting brackets 22, one on each side of the web 12. The limiting brackets 22 are also secured to the vane plates by countersunk rivets and each has a pair of holes which may be aligned with holes on the web 12 to allow bolts (not shown) to pass therethrough. The bolts are inserted through the limiting brackets 22 and the web 12 via pairs of external holes 24 on the vane plates (see Figure 2). Once inserted through the limiting brackets 22 and web 12 the bolts engage threaded holes in the web 12, and are tightened by a screwdriver or allen key. The process for removing the vane plates is the reverse. Namely, the bolts passing through the limiting brackets 22 are undone and are retrieved through holes 24 in the plates 14. The plates 14 are then free to slide rearwardly (i.e. in the direction of arrow A) and can be withdrawn for repair of replacement.

A third type of bracket, denoted as 26 in Figure 1, is also provided, one on each side of the web 12. This bracket 26 is bolted to the lowest retaining plate 16 on each side of the web 12 and acts to prevent movement of the mounting bracket 20 immediately below it (and therefore movement of the vane plane 14 itself) in a direction perpendicular to the direction of exhaust gas flow and in the plane of the web 12.

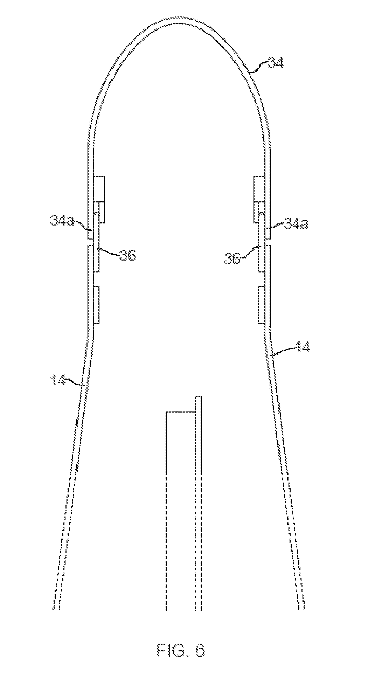

Figure 3 shows the vane 10 from the trailing edge perspective. In Figure 3 a plurality of perforations 28 are shown which extend across substantially the entire surface of the vane plates 14. The purpose of the perforations 28 is to permit pressurised cooling air from the interior of the vane to leave the vane causing a cooling film of air on the outer surfaces of the vane plates, which air then joins the core flow of hot exhaust gases. The cooling air may, for example, be taken from the compressor, or may be lower pressure bypass air from the exterior of the duct. Figure 3 also shows seal plates 36 attached along the leading edges of the vane plates 14 for engagement with a permanent leading edge profile described below with reference to Figure 6.

Figure 4 is a detailed view of the mounting arrangement for the web at an upper edge thereof. The web 12 passes through an opening in the upper duct casing panel 30 and is secured there by bolts (not shown). A small gap 32 is left between the upper edge of the vane plates 14 and the duct casing 30 to allow for the vane plates to expand thermally in use. When the plates 14 expand thermally a seal is formed with the duct casing panel 30. The uppermost retaining plate 16 and mounting bracket 20 are also shown in Figure 4. The web 12 is secured in substantially the same manner at its opposite, lower edge (not shown).

Figure 5 shows in detail a portion of the web 12 and a pair of retaining plates 16 holding a pair of mounting brackets 20 (the vane plates are omitted for clarity). It can be seen that the retaining plates 16 are fixed to the web 12 by bolt 18 and corresponding nut 18a, and that the web 12 has machined shoulders 12a each of which supports one of the tangs 20a of the mounting brackets 20. The mounting brackets 20, and therefore the vane plates (not shown) to which they are riveted (at a remote tang not shown) are free to slide in the plane of the web 12 for mounting and dismounting of the vane plates on the web. The retaining plates 16 react against the tangs 20a on the mounting brackets 20, taking the bursting load from the vane panel.

As can be seen from Figure 3, the vane plates 14 do not join at their leading edges. Instead, in order to complete the vane structure the vane plates 14 are made to engage a permanent leading edge profile, which is shown as 34 in Figure 6. This permanent leading edge profile 34 is fixed at upper and lower edges to the duct casing (not shown). Figure 6 is a plan schematic view of the leading edge of the vane 10. The leading edge of vane plates 14 have seal plates 36b riveted thereto. As the vane plates 14 are slid along the web 12 in the manner described above, the seal plates 36 become located along the inside of edge liners 34a of the leading edge profile 34. The seal plates are secured against the edge liners 34a by "birds beak" features, so that a gas tight seal can be formed whilst still allowing the vanes to slide and to expand thermally.

The vane according to the above described embodiment provides a number of advantages when compared with previously considered vane designs. In particular, the assembly of a shear web supporting vane plates on brackets allows for free circulation of cooling air within the vane. Furthermore, the design is of a low weight and low cost and is free from thermal strain when compared with previous designs, allowing the maintenance of a flat panel. Also, complex welding is avoided as is the associated distortion of the plates. The load on each of the mounting brackets 20 is wholly or partly reacted by an adjacent one on the other side of the web 12. Moreover the vane plates 14 can be easily mounted and dismounted from the web requiring only the removal of a pair of bolts from the limiting brackets 22. This allows the vane plates to be replaced readily for maintenance or to alter the throat area in the exhaust duct during testing, without requiring major disassembly of the exhaust system.

In the above described embodiment the slidable movement of the vane plates 14 is limited by the engagement of the limiting brackets 22 with the web 12. However, it will be apparent to one skilled in the art that other arrangements could be made for limiting this movement, just as other arrangements could be made for retaining the mounting brackets 20 in slidable engagement with the web 12 without departing from the scope of the invention.

Similarly, while the above example has been described in relation to the exhaust duct of a gas turbine engine, it will be apparent to one skilled in the art that such a design could be employed in various engineering applications where fluid flows through a duct and/or an aperture, without departing from the scope of the invention.

## Claims

1. A vane for use in a duct, the vane comprising a Web (12) arranged to extend substantially across the duct and to be fixedly attached to at least one wall thereof, and one or more vane plates (14) removably mountable on the web.

2. A vane according to claim 1 wherein the or each vane plate (14) includes at least one mounting member (20) arranged for slidable engagement and disengagement with the web (12).

3. A vane according to claim 2 wherein the at least one mounting member (20) comprises a mounting bracket fixed to the vane plate and retained slidably on the web by engagement with a retaining plate (16) fixed to the web.

4. A vane according to claim 2 or claim 3 wherein the sliding movement of the vane plate with respect to the web can be limited by a limiting member (22) fixed to the plate and arranged to removably engage the web.

5. A vane according to any of claims 1 to 4 wherein the or each vane plate is arranged in use to slidably and removably engage a fixed leading edge vane profile (34) mounted inside the duct.

6. A vane according to any of claims 1 to 5 wherein the or each vane plate has a plurality of holes or perforations (28) arranged to permit the flow of cooling air from an interior of the vane to an exterior of the vane.

7. A vane according to any of claims 2 to 4 wherein the mounting member is riveted to the vane plate.

8. A vane according to any of claims 1 to 7 for use in an exhaust duct of a gas turbine engine.

9. A method of forming a vane in a duct the method comprising removably mounting at least one vane plate (14) on a web (12) which extends substantially across the duct and is fixedly attached to at least one wall thereof.

10. A method according to claim 9 comprising locating a mounting member (20) of a vane plate for slidable engagement with the web, and sliding the vane plate into a desired position in relation to the web.

11. A method according to claim 10 comprising preventing further sliding movement of the vane plate with respect to the web, once a desired position is reached, by removably attaching to the web a limiting member (22) which is fixed to the vane plate.
